# EUROPEAN PATENT APPLICATION

(11) **EP 2 022 728 A1**
(43) Date of publication of application: **11.02.2009**
(21) Application number: 07113983.6
(22) Date of filing: 08.08.2007
(51) Int. Cl.: B65D 81/38

(54) **Container for the transport of temperature sensitive products**

(71) Applicant: F.HOFFMANN-LA ROCHE AG, 4070 Basel (CH)
(72) Inventor: Büttiker, Jean-Pierre, 4108 Witterwil (CH)
(74) Representative: Bohest AG

(57) **Abstract**

A container (1) for the transport of temperature sensitive products comprises a base (10), one or more side walls (11), and a lid (12), which are made from an insulating foam and which together define a container inner space in the assembled state. Thermal insulation means are arranged in the base (10), in the one or more side walls (11), and in the lid (12). The base (10) and the one or more side walls (11) together are a single integrally formed piece (10,11). Both the said single piece (10,11) as well as the lid (12) are produced through expansion molding. The insulation means comprise vacuum insulation panels (2) having an insulating core enclosed by a foil. The vacuum insulation panels (2) are completely encapsulated in the expanded insulating foam of the single piece (10,11) and the lid (12).

## Description

The present invention deals with a container for the transport of temperature sensitive products.

In various fields of application the transport of temperature sensitive products is not rarely prescribed by the competent authorities and must be strictly observed. This holds in particular for a number of products (e.g. biotechnologically produced products containing proteins) produced by the pharmaceutical industry which are to be distributed to hospitals, pharmacies, etc.. For such products, it is oftenly a requirement that a continuous (uninterrupted) cold chain must be maintained from production until delivery of the product. A typical prescribed temperature range is 2°C to 8°C.

The products are usually transported in large containers which are themselves surrounded by cardboard or the like, and are stacked on pallets. The temperature in the containers used for the transport of the products is measured during transport, that is to say a measuring device is arranged in the product containment space of the respective containers together with the products to be transported. The measuring device records the temperature during transport of the products, so that upon receipt of the container, the recipient may easily check whether or not the cold chain has been interrupted.

However, while the above-described transportation of large containers on pallets may be an efficient way for the distribution of large amounts of products, it is not an efficient way for the distribution of smaller amounts of products via courier, as this may be desirable for products for clinical studies, for example. One reason is, that a temperature measuring device must be present in each container, which represents substantial expense. Another reason is, that the usual containers are voluminous and are not suitable for delivery of small amounts of products via courier because of their unconvenient handling.

Containers for the transport or storage of blood or temperature sensitive medical products are known, for example, from EP-A-1 302 410. Such containers allow the transport of small amounts of products. The container comprises a number of pieces - at least three - that need to be assembled with the aid of groove-and-tongue joints. In the inner space of the container defined after assembly of the pieces, a temperature measuring device such as a thermometer or a suitable temperature recording device is provided which can be checked by the recipient upon receipt of the container in order to verify that the cold chain has not been interrupted. The walls of the container elements are double-walls, and the space between the double-walls is filled with a paraffin-based latent heat storage medium which has a phase transition in the desired temperature range to be maintained.

More recently, very efficient types of vacuum insulation panels have been suggested which are particularly suitable for keeping the temperature in a container stable. Such vacuum insulation panels are described, for example, in EP-A-1 177 879. They comprise an insulating core made from a porous material which is enclosed by a gas-tight foil. The space enclosed by the foil is evacuated prior to the complete welding or sealing of the foil. The foil may be a plastic foil to which a metal (e.g. aluminum) may be laminated acting as a diffusion barrier. It is immediately evident that once the foil is damaged the vacuum in the space enclosed by the foil is no longer maintained which in turn is detrimental to the insulating properties of the vacuum insulation panel.

In EP-A-1 544 367 a laminated heat insulating board is suggested comprising a vacuum insulation panel the foil of which is covered on its large faces by plates made from a compressed polyurethane foam. The foam plates are glued or collated to the foil with the aid of a suitable adhesive. However, the edges of the vacuum insulation panel are still uncovered. While the heat insulating boards disclosed there are suggested to be used as insulating boards for wall constructions of buildings, the foil can still get damaged at the edges.

It is an object of the invention to suggest a container which is suitable for the thermally stable transport not only for large amounts of temperature sensitive products but also of small amounts of such products. At the same time, the container should be easy to manufacture.

This object is achieved through the container as it is defined by the features of independent claim 1. Advantageous embodiments are the subject of the respective dependent claims.

In particular, the container for the transport of temperature sensitive products according to the invention comprises a base, one or more side walls, and a lid, which are made from an insulating foam and which together define a container inner space in the assembled state, with thermal insulation means being arranged in the base, in the one or more side walls, and in the lid, respectively. The base and the one or more side walls together are a single integrally formed piece. Both the said single piece (comprising the base and the side wall or side walls) as well as the lid are produced through expansion molding. The insulation means comprise vacuum insulation panels having an insulating core enclosed by a foil. The vacuum insulation panels are completely encapsulated in the expanded insulating foam of the single piece (comprising the base and the side wall or side walls) and the lid.

Expansion molding is a well-established technique for the manufacturing of moldings having a desired shape and is described in the literature. Therefore, the following description only shortly summarizes essential steps of this technique. First, the mold is filled with a foaming material, for example in the form of pre-expanded beads of the foaming material. Once filling of the mold with the pre-expanded beads has been completed, the mold is closed and steam or another suitable propellant gas causes melting and substantial expansion of the beads. Thus, a molding having the desired shape defined by the mold is produced which is made from an expanded insulating foam. After cooling of the mold (if necessary), the mold can be opened and the molding can be demolded, i.e. it can be taken out from the mold.

In the instant invention, the base and the at least one side wall are a single integrally formed piece. Since it may be possible to manufacture any desired shapes of containers as long as deforming of the respective moldings is possible, it may also be possible that the single integrally formed piece has a base and only one side wall (e.g. circular outer shape of the side wall). In the case of an essentially rectangular shape of the container, there are four side walls (front and rear side wall, left and right side wall). The vacuum insulation panels are arranged in the mold prior to filling the mold with the pre-expanded beads in a manner such that the vacuum insulation panels are completely encapsulated in the expanded foam. Once the vacuum insulation panels, in particular the foils of the panels, are completely encapsulated in the expanded foam, they cannot easily get damaged since they are protected by the expanded insulating foam which fully encapsulates the vacuum insulation panels. At the same time, nearly any desired size and shape of container can be produced using a reliable and well-known technique.

This is particularly advantageous with respect to the transport of small amounts of products, since it is thus possible to produce comparatively small containers which, for example, may have a volume of the inner space of about 12 liters or 24 liters (and which may carry loads of about 10 kg), and which at the same time have excellent thermal insulation properties. It is thus possible to deliver smaller amounts of products by courier since the dimension of the container are such that it can be conveniently handled as a single item. In addition, given that the delivery will be performed within three days from closing the container no temperature measuring device is required in the inner space of the container since the temperature is maintained stable there (i.e. the temperature is kept within the specified range) for at least this period of time, so that upon receipt of the container the recipient need not check the temperature within the container but simply has to check the date of filling, closing and shipping the container.

The container according to the invention is, however, in no way limited to the sizes mentioned above. In particular, also large container sizes can be produced which can be stacked and shipped with or without integrated pallets. However, the duration of the intercontinental transport of such containers may vary considerably due to delays caused by customs, for example, or due to other reasons, so that the true duration cannot be defined in advance. A thermometer or other temperature recording device should then be arranged in the inner space of the container so that the upon receipt of the container the recipient may check whether the cold chain has not been interrupted during transport.

A preferred embodiment of the container according to the invention further comprises preconditioned temperature storage units which may contain a latent heat storage medium (e.g. paraffin-based, which has a phase transition in the specified temperature range, as already described above). The preconditioned temperature storing units are arranged in the inner space of the container and define a product containment space for the products to be stored or transported. In particular, the preconditioned temperature storing units may have a shape which is adapted to define a suitable product containment space, where the products to be transported are to be arranged.

As already mentioned above, in a further embodiment of the container according to the invention a temperature measuring element is arranged in the container inner space or in the product containment space, respectively. The temperature measuring element (such as a thermometer or a temperature recording device) allows the recipient to check whether the cold chain has been continous or whether it has been interrupted.

In a further preferred embodiment of the container according to the invention, the insulating foam is expanded polystyrene, or expanded polypropelene, or expanded polyurethane. These materials are well-known as being suitable for the expansion molding technique to form containers having the desired shape and size. For example, suitable pre-expanded polystyrene beads for expansion molding to form the expanded polystyrene are available under the trademarks Styropor® by BASF, Ludwigshafen, Germany. An example of pre-expanded polypropylene beads suitable for exapnsion molding to form the expanded polypropylene are beads offered by BASF, Ludwigshafen, Germany, under the trademark Neopolen®. Also, expansion molding to obtain expanded polyurehthane insulating foam is well-known in the art.

While the expansion molding technique can be used in a particularly advantageous application to form containers as described above with vacuum panels being completely encapsulated in the expanded insulating foam, this is not the only field of application. Therefore, another aspect of the invention more generally deals with an insulating body for thermal insulation, for example an insulating board, comprising a vacuum insulation panel having an insulating core which is enclosed by a foil. The vaccum insulation panel is arranged fully enclosed in a jacket made from a thermally insulating foam which is produced through expansion molding. Also here, the vacuum panel is completely encapsulated in the expanded insulating foam.

Accordingly, such an insulating body, for example an insulating board, is advantageous over those of the prior art in that due to the full encapsulation of the vacuum insulation panel in the expanded insulating foam, the vacuum insulation panel and in particular the foil enclosing the insulating core is protected against damages.

Of course, in an advantageous embodiment of the insulating body according to the invention the insulating foam is expanded polystyrene, or expanded polypropelene, or expanded polyurethane, as this has already been described above for the container.

The expansion molding technique is applicable to form an insulating body having many desired shapes and, accordingly, another aspect of the invention deals with a method for forming an insulating body, for example a container or an insulating board, comprising the steps of:
arranging at least one vacuum insulation panel in a mold,
filling the mold with a material capable of forming an expandable insulating foam such that the at least one vacuum insulation panel is completely surrounded by the material,
expanding the material in the mold so as to form an insulating body comprising the at least one vacuum insulation panel completely encapsulated in the expanded insulating foam, and
demolding the insulating body from the mold.

Further advantageous aspects of the invention can be gathered from the following description of a preferred embodiment of the invention in the form of container with the aid of the drawings, in which:
- Fig. 1: shows a detail of a container according to the invention in a cross-sectional view, and
- Fig. 2: shows a prespective view of a pallet with a number of containers according to the invention being stacked on the pallet for shipping.

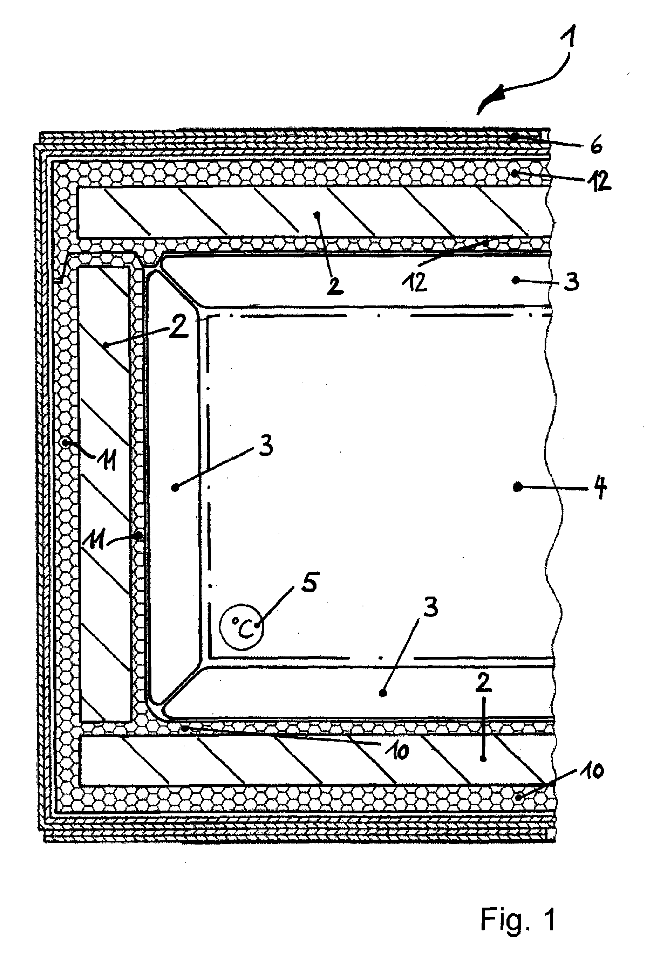

In Fig. 1 a detail of an embodiment of a container 1 according to the invention is shown in cross-sectional view. Container 1 comprises a base 10, side walls 11 (only the left side wall is shown in Fig. 1 while the remaining side walls, namely front and rear wall as well as right side wall, are not shown in Fig. 1), and a lid 12. Vacuum insulated panels 2 are arranged in base 10, side walls 11 and in lid 12. Base 10 and side walls 11 together form a single integrally formed piece (the lower part of container 1). Both the integrally formed piece comprising base 10 and side walls 11 as well as the lid 12 are made from an insulating foam produced through expansion molding, so that vacuum insulated panels 2 are completely encapsulated in the expanded insulating foam of the single piece comprising base 10 and side walls 11 as well as in the insulating foam of lid 12. Suitable materials for the expanded insulating foam are those already mentioned above, for example, expanded polystyrene.

In the inner space of container 1 there are arranged a number of preconditioned temperature storage units 3, which define a product containment space 4 (the boundaries of which are indicated by a dash-and-dot line in Fig. 1), into which the products can be inserted. Temperature storage units 3 can be conventional, for example, they may contain a medium making a phase transition in the desired temperature range, which may be in the range of 2°C to 8°C. For example, the medium contained in temperature storage units may be a paraffin-based medium.

As can be seen in Fig. 1, vacuum insulation panels 2 are completely encapsulated in the expanded foam of the single piece (the lower part of container 1) comprising base 10 and side walls 11 and in the expanded foam of lid 12, so that they cannot get damaged during normal transport and handling of container 1. A temperature measuring element 5 such as a thermometer or a temperature recording device may be arranged in product containment space 4, which can be checked upon receipt of the container in order to verify that the cold chain has not been interrupted during storage or transport. However, for short time (up to three days) transport, e.g. for courier delivery of products such as biotechnologically produced products containing proteins or other temperature sensitive products, temperature measuring element 5 is optional and can also be omitted. Container 1 is surrounded by a corrugated cardboard box 6 for transportation, which has a double layer on its top and bottom (as shown in Fig. 1).

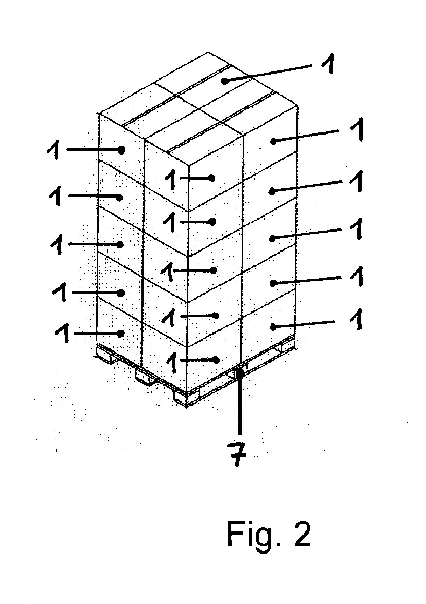

Container 1 can be delivered by courier as a single item or, in the alternative, a number of containers 1 can be stacked on a standard pallet for shipping. Such a pallet 7 with a number of containers 1 stacked upon one another and/or adjacent to one another is shown in Fig. 2. Transport of containers 1 on pallets 7 is particularly advantageous for the transport of empty containers 1 from their manufacturing point to the filling, closing and shipping point. Another advantageous field of transportation of containers 1 on pallets 7 is the transport of containers 1 on pallets to a courier collecting point, where the single containers 1 are removed from the pallets 7 in order to get distributed to their respective destinations.

While the invention has been described for the embodiment of a container, it is not limited thereto. It is well possible to produce other insulating bodies, e.g. insulating boards or the like, or bodies having a different shape, comprising a vacuum insulation panel having an insulating core enclosed in a foil with the vacuum insulation panel being arranged fully enclosed in a jacket. The jacket is made from a thermally insulating foam which is produced through expansion molding as described above. The vacuum panel is then completely encapsulated in the expanded insulating foam, so that it cannot get damaged, in particular the foil is protected from damage by the encapsulating insulating foam.

## Claims

1. Container (1) for the transport of temperature sensitive products, comprising a base (10), one or more side walls (11), and a lid (12), which are made from an insulating foam and which together define a container inner space in the assembled state, with thermal insulation means being arranged in the base (10), in the one or more side walls (11), and in the lid (12), respectively, **characterized in that** the base (10) and the one or more side walls (11) together are a single integrally formed piece (10,11), wherein both the said single piece (10,11) as well as the lid (12) are produced through expansion molding, and wherein the insulation means comprise vacuum insulation panels (2) having an insulating core enclosed by a foil, with the vacuum insulation panels (2) being completely encapsulated in the expanded insulating foam of the single piece (10,11) and the lid (12).

2. Container (1) according to claim 1, further comprising preconditioned temperature storage units (3) being arranged in the inner space and defining a product containment space (4) for the products to be stored or transported.

3. Container (1) according to any one of the preceding claims, further comprising a temperature measuring element (5) arranged in the container inner space or in the product containment space (4), respectively.

4. Container (1) according to any one of the preceding claims, wherein the insulating foam is expanded polystyrene, or expanded polypropelene, or expanded polyurethane.

5. Insulating body for thermal insulation, for example an insulating board, comprising a vacuum insulation panel having an insulating core enclosed by a foil, the vacuum insulating panel being arranged fully enclosed in a jacket, **characterized in that** the jacket is made from a thermally insulating foam which is produced through expansion molding, with the vacuum panel being completely encapsulated in the expanded insulating foam.

6. Insulating body according to claim 5, wherein the insulating foam is expanded polystyrene, or expanded polypropelene, or expanded polyurethane.

7. Method for forming an insulating body, for example a container or an insulating board, comprising the steps of:
- arranging at least one vacuum insulation panel in a mold,
- filling the mold with a material capable of forming an expandable insulating foam such that the at least one vacuum insulation panel is completely surrounded by the material,
- expanding the material in the mold so as to form an insulating body comprising the at least one vacuum insulation panel completely encapsulated in the expanded insulating foam, and
- demolding the insulating body from the mold.
